# DEMANDE DE BREVET EUROPEEN

(11) **EP 4 287 049 A1**
(43) Date de publication de la demande: **06.12.2023**
(21) Numéro de dépôt: 23174120.8
(22) Date de dépôt: 17.05.2023
(51) Int. Cl.: G06F 21/36

(54) **ACCÈS À UN SERVICE BASÉ SUR LA RECONNAISSANCE DE TYPE D'OBJET DANS UNE PHOTO**

(30) Priorité: 31.05.2022 FR 2205245
(71) Demandeur: Orange, 92130 Issy-les-Moulineaux (FR)
(72) Inventeur: WEENS, Franck, 92326 CHATILLON CEDEX (FR); RAMUS, Catherine, 92326 CHATILLON CEDEX (FR); DAUHUT, Camille, 92326 CHATILLON CEDEX (FR)
(74) Mandataire: Plasseraud IP

(57) **Abrégé**

La divulgation est relative à une vérification d'un code d'accès à un service, dans lequel le code d'accès est au moins un type d'objet à reconnaitre par le dispositif, le procédé comprenant:
- obtenir des données d'au moins une image comportant au moins un objet,
- mettre en oeuvre une intelligence artificielle afin de reconnaitre un type d'objet dans ces données d'image, et
- en cas de reconnaissance du type d'objet, donner accès au service.

## Description

### Domaine technique

La présente divulgation relève du domaine de la sécurité d'accès à un service.

### Technique antérieure

L'accès à un service sécurisé requiert le plus souvent la saisie d'un mot de passe composé d'une séquence de caractères saisie sur un clavier. Ces mots de passe ne sont pas toujours sécurisés du fait de leur simplicité. Par exemple, ils doivent être renouvelés régulièrement, ce qui entraîne parfois une confusion des utilisateurs.

### Résumé

La présente divulgation vient améliorer la situation.

Il est proposé un procédé mis en oeuvre par un dispositif informatique, de vérification d'un code d'accès à un service, dans lequel le code d'accès est au moins un type d'objet à reconnaitre par le dispositif, le procédé comprenant :
- obtenir des données d'au moins une image comportant au moins un objet,
- rechercher, par reconnaissance informatique, au moins un type d'objet dans lesdites données d'image, et
- en cas de détection du type d'objet dans lesdites données d'image, donner accès au service.

Ainsi, il est proposé la vérification d'un code visuel pour accéder à un service. Par exemple, dans des modes de réalisation, le type d'objet peut être choisi initialement par un utilisateur, puis ce type d'objet est présenté à une caméra avec d'autres types d'objet, et la reconnaissance informatique peut alors rechercher la présence du type d'objet préalablement choisi par l'utilisateur, ce qui déclenche l'accès au service requis par l'utilisateur.

Il est entendu ici par « type d'objet », non pas nécessairement le même objet strictement que l'utilisateur avait choisi précédemment, mais un même type d'objet (par exemple une banane, un stylo, ou autres). Ainsi, il suffit alors que l'utilisateur présente par exemple une banane ou un stylo quelconque à la caméra, lors de l'étape de reconnaissance informatique, pour que ce type d'objet soit détecté, ce qui donne accès au service.

En tant que reconnaissance informatique, il peut être par exemple mis en oeuvre une reconnaissance de forme (accompagnée éventuellement d'une reconnaissance de couleur). Ainsi, une forme oblongue incurvée, et de couleur jaune, peut être reconnue par exemple comme une banane, tandis qu'une forme longiligne dans une gamme de gris peut être identifiée comme un stylo.

Dans une autre réalisation par exemple, la recherche par reconnaissance informatique, précitée, peut mettre en oeuvre une intelligence artificielle afin de reconnaitre un type d'objet dans les données d'image.

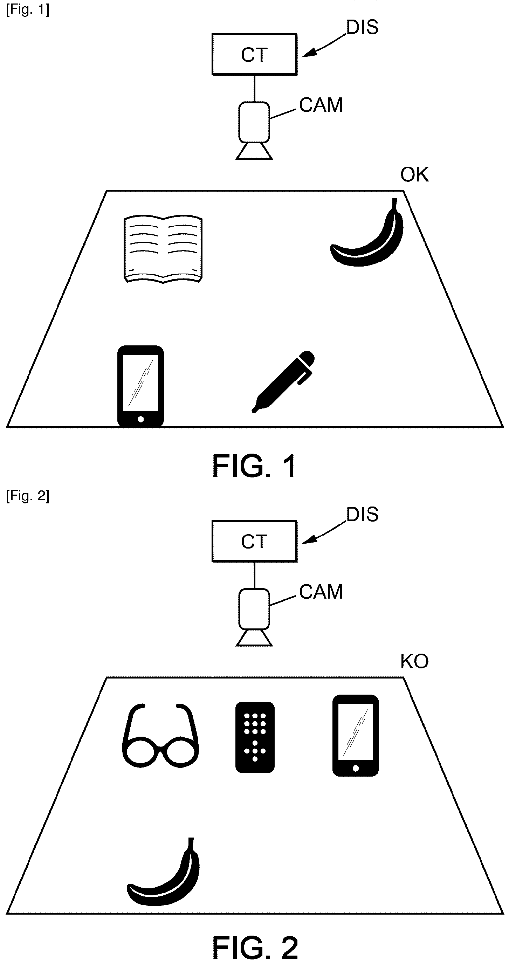

Cette intelligence artificielle peut être programmée initialement pour reconnaitre une pluralité de types différents d'objets (par exemple une banane, une pomme, un stylo, un smartphone, etc., comme on le verra dans des exemples plus loin notamment en référence à la figure 1). Une phase d'apprentissage peut consister à présenter plusieurs images différentes d'un même type d'objet, comme une banane, de longueur, de grosseur, de nuances de couleurs, d'éclairage, etc., différents. Pour une multiplicité d'images d'apprentissage, l'intelligence artificielle est renseignée pour chaque image comme représentant ce même type d'objet. Si le nombre d'images d'apprentissage est suffisant, l'intelligence artificielle peut être suffisamment robuste ensuite pour reconnaitre un type d'objet comme une banane, quelque soit sa forme précise, sa couleur précise, les conditions de son éclairage, etc. Cette intelligence artificielle ne reconnait donc pas un objet spécifique en tant que tel, mais un type d'objet.

L'intelligence artificielle peut être programmée en particulier pour reconnaitre différents types d'objets. De manière plus générale, la reconnaissance informatique précitée peut être configurée pour reconnaitre différents types d'objets.

Il est possible ainsi de composer différents types d'objets dans une image pour qu'il soit vérifié la présence d'un au moins de ces types d'objets, ou encore de chacun de ces types d'objets afin de donner accès au service requis.

Ainsi, dans une réalisation, les données d'image peuvent comporter une pluralité d'objets, et le procédé peut comprendre en outre :
- en cas de détection de chaque type d'objet correspondant chacun à un objet dans les données d'image, donner accès au service.

Dans une réalisation où les données d'image comportent cette pluralité d'objets dans un même plan d'image, le code d'accès peut comprendre, outre les types d'objets à détecter dans un même plan d'image, une disposition à détecter de chaque type d'objet dans le plan d'image.

La figure 1 illustre une telle réalisation où par exemple la banane est en haut à droite, le livre en haut à gauche, le stylo en bas au milieu, etc. L'image acquise peut alors être découpée en secteurs pour rechercher un type d'objet attendu par exemple dans chaque secteur.

La recherche de la disposition d'un type d'objet dans le plan d'image peut aussi être mise en oeuvre lorsque les données d'images comportent un seul objet ou qu'un seul type d'objet est à rechercher dans l'image. Par exemple, on peut rechercher la disposition d'une banane en haut à gauche de l'image.

Le code d'accès peut comprendre, outre les dispositions à détecter pour chaque type d'objet dans le plan d'image, une orientation angulaire dans la disposition d'au moins un de ces objets, à détecter dans le plan d'image.

Par exemple, le stylo en bas au milieu de la figure 1 peut devoir être reconnu en tant que type d'objet tel qu'un stylo, dans un secteur en bas au milieu de l'image, et dans une orientation angulaire particulière par rapport au reste de l'image, par exemple à l'horizontale ou à la verticale du plan de l'image.

Dans une réalisation, les données d'image peuvent comporter un plan d'image d'un bureau comprenant au moins un élément parmi un clavier, une souris (d'ordinateur), une tasse, un stylo, une feuille de papier, un smartphone.

Une telle réalisation peut trouver une application notamment bureautique par exemple pour ouvrir l'accès à un ordinateur.

Dans d'autres modes de réalisation, les données d'images peuvent comporter un plan d'image d'une partie d'une pièce (par exemple un mur avec des objets suspendus) ou d'un élément du mobilier de la pièce.

Dans une réalisation complémentaire ou alternative à la présentation de différents objets dans une même image, les données d'image peuvent comporter une succession d'images comportant chacune au moins un objet distinct d'une image à une image suivante dans la succession précitée. Dans une telle réalisation, le code d'accès peut alors comprendre les différents types d'objets à détecter dans les images successives.

Par exemple, le code d'accès peut comprendre les types d'objets à détecter dans un ordre correspondant aux images successives.

Ainsi, il est possible de présenter successivement différents types d'objets à une caméra qui acquière une séquence d'images, et le code d'accès peut consister à reconnaitre ces différents types d'objets présentés ensuite dans le même ordre que cette séquence.

Selon un autre aspect, il est proposé un programme informatique comportant des instructions pour la mise en oeuvre de tout ou partie d'un procédé tel que défini dans les présentes lorsque ce programme est exécuté par un processeur. Selon un autre aspect, il est proposé un support d'enregistrement non transitoire, lisible par un ordinateur, sur lequel est enregistré un tel programme.

Selon un autre aspect, il est proposé un dispositif informatique comportant un circuit de traitement configuré pour mettre en oeuvre une reconnaissance informatique d'au moins un type d'objet dans des données d'image, pour la réalisation du procédé tel que défini dans les présentes.

Ce dispositif informatique peut comporter une interface de communication pour obtenir les données d'image et émettre une donnée de validation du code d'accès. Dans une telle réalisation, ce dispositif peut prendre par exemple la forme d'un serveur recevant les données d'image acquises par la caméra d'un dispositif distant.

Alternativement, le dispositif informatique peut comporter une caméra reliée au circuit de traitement pour obtenir ces données d'image (et par exemple exécuter en local l'enregistrement et la vérification ultérieure du code d'accès). Dans une telle réalisation, le dispositif informatique peut être un terminal de type smartphone, ordinateur, tablette ou autre.

La caméra précitée peut être montée dans le dispositif pour être orientée vers le bas (pour acquérir par exemple une image d'un plan de bureau), en vue de la mise en oeuvre du procédé dans une application bureautique telle que présentée ci-avant. Une telle réalisation présente en outre l'avantage de rechercher les types d'objets sur un fond neutre tel qu'un plan de bureau, en utilisant ainsi une caméra zénithale, par exemple, visant ce fond neutre.

### Brève description des dessins

D'autres caractéristiques, détails et avantages apparaîtront à la lecture de la description détaillée ci-après, et à l'analyse des dessins annexés, sur lesquels :
**Fig. 1**
   [Fig. 1] montre un exemple de code d'accès visuel à reconnaitre dans un même plan d'image.
**Fig. 2**
   [Fig. 2] montre un exemple de plan d'image ne correspondant pas au code visuel de la figure 1 et conduisant à un échec d'accès au service requis.
**Fig. 3**

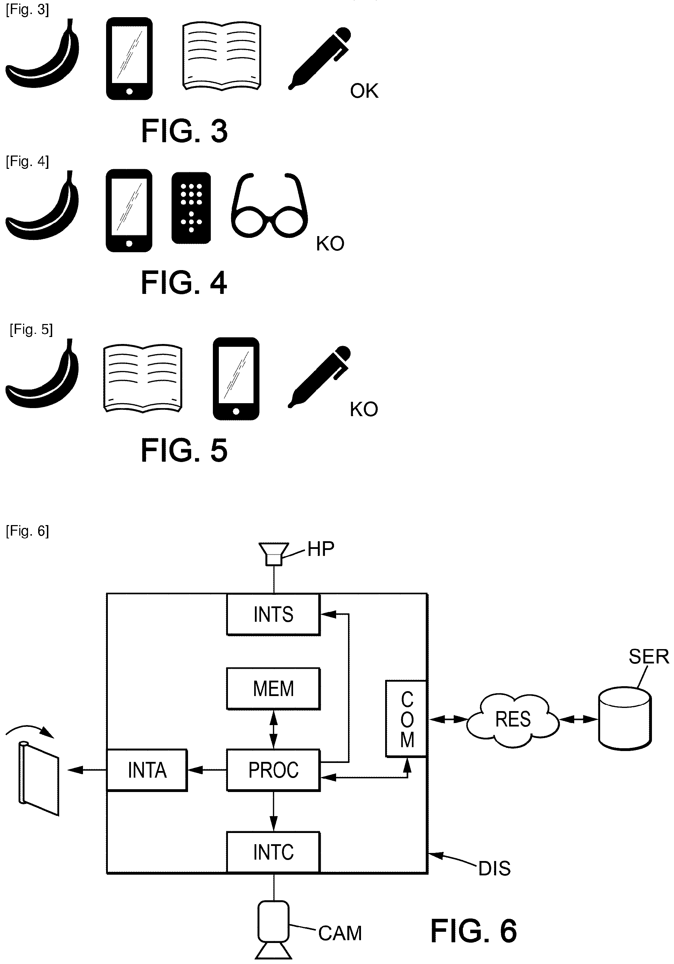

   [Fig. 3] montre un autre exemple de code d'accès visuel, constitué d'une séquence d'images dans lesquelles chaque type d'objet est successivement à reconnaitre.
**Fig. 4**
   [Fig. 4] montre un exemple de séquence d'images ne correspondant pas au code visuel de la figure 3 et conduisant à un échec d'accès au service requis, car certains des types d'objets ne correspondent pas au code.
**Fig. 5**
   [Fig. 5] montre un exemple de séquence d'images ne correspondant pas au code visuel de la figure 3 et conduisant à un échec d'accès au service requis, car l'ordre d'apparition de certains des types d'objets ne correspond pas à la séquence du code visuel.
**Fig. 6**
   [Fig. 6] montre un exemple de réalisation d'un dispositif pour la mise en oeuvre du procédé défini ci-avant.
**Fig. 7**

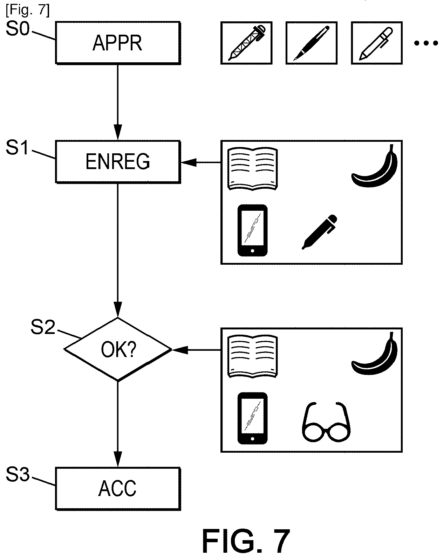

   [Fig. 7] montre un exemple d'étapes d'un procédé du type défini ci-avant.

### Description des modes de réalisation

Il est maintenant fait référence à la figure 1 illustrant un mode de réalisation selon lequel un dispositif informatique, équipé d'une caméra et d'un circuit de traitement, implémente une reconnaissance informatique (par exemple par intelligence artificielle), d'au moins :
- des types d'objets présents dans le champ de la caméra (une banane, un livre, un stylo, un smartphone, dans l'exemple illustré sur la figure 1), et
- une disposition de ces objets dans l'image (la banane en haut à droite, le livre en haut à gauche, etc.).

Le choix de ces différents types d'objets et leur disposition sont préalablement décidés par l'utilisateur comme « code d'accès ». Ce code d'accès consistant en ces types d'objets prédéfinis et disposés de façon spécifique dans une image courante doit être reconnu ensuite par le dispositif pour donner à l'utilisateur un accès à un service requis. Ainsi, dans l'exemple illustré sur la figure 1, le circuit de traitement CT du dispositif DIS doit reconnaître par exemple dans l'image acquise par la caméra CAM :
- une banane dans une portion d'image en haut à droite,
- un livre ou des feuilles de papier imprimées dans une portion d'image en haut à gauche,
- un smartphone dans une portion d'image en bas à gauche,
- un stylo dans une portion d'image centrale en bas.

La caméra CAM peut être fixée par exemple à un écran d'ordinateur pour acquérir dans son champ les images d'un plan de bureau sur lequel sont disposés ces différents objets. La position de la caméra est de préférence fixe entre la phase préalable d'enregistrement du code d'accès choisi par l'utilisateur, et la phase ultérieure de reconnaissance de types d'objets disposés par l'utilisateur pour valider le code d'accès. Ainsi, le champ de la caméra est sensiblement le même entre ces deux phases. Par exemple, cette position de la caméra peut être en butée contre l'écran pour acquérir les images vers le bas comme illustré sur la figure 1. En variante, la caméra peut acquérir un champ large et la disposition des objets peut être reconnue par les dispositions relatives des objets les uns par rapport aux autres (par exemple la banane à droite du livre et au-dessus du stylo).

Dans la phase préalable d'enregistrement du code d'accès, dans le cas d'une utilisation d'une l'intelligence artificielle, cette dernière peut reconnaitre dans une image acquise par la caméra, selon le choix de types d'objets et de leurs dispositions (positions et éventuellement orientations) par l'utilisateur :
- un type d'objet tel qu'une banane dans une portion d'image en haut à droite,
- un type d'objet tel qu'un livre (ou des feuilles de papier imprimées) dans une portion d'image en haut à gauche,
- un type d'objet tel qu'un smartphone dans une portion d'image en bas à gauche,
- un type d'objet tel qu'un stylo dans une portion d'image centrale en bas.

Le circuit de traitement CT enregistre ces informations de types d'objets et leurs dispositions relatives (ou absolues telles que « banane dans un quart droit en haut d'image », « livre dans un quart gauche en haut d'image », etc.), en tant que code d'accès à devoir reconnaitre dans une utilisation future.

Ici, le dispositif reconnait en particulier un ou plusieurs « types » d'objets et non pas ces objets en tant que tels. Par exemple, un objet comme une banane est unique. L'usage ici d'une recherche informatique (par reconnaissance de formes ou par la mise en oeuvre d'une intelligence artificielle) consiste alors en la reconnaissance simple d'une banane quelconque, par rapport à une pomme ou un autre type d'objet.

Par exemple, une intelligence artificielle classique peut être programmée pour apprendre à reconnaitre différents types d'objets (smartphones, tasses de café ou thé, stylos, livres ou feuilles imprimées, fruits divers (de type banane, pomme, et/ou autres)). Ensuite après cette phase d'apprentissage, l'intelligence artificielle peut reconnaitre dans l'image composée par l'utilisateur ces différents types d'objets dans une image acquise par la caméra. En effet, au cours de la phase préalable d'enregistrement du code accès, le circuit de traitement peut stocker ces données d'information (types d'objets reconnus et positions) en tant que code d'accès à reconnaitre ultérieurement pendant une phase de vérification de validation du code d'accès décrite maintenant en référence à la figure 2. Le code d'accès peut comprendre, outre les dispositions dans chaque secteur d'image où chaque type d'objet est à reconnaitre, une orientation angulaire dans la disposition d'au moins un de ces objets (par exemple l'orientation de la banane, ou du stylo, ou des lignes d'impression des feuilles de papier, ou autres). Par exemple, le stylo en bas au milieu de la figure 1 peut devoir être reconnu en tant que type d'objet tel qu'un stylo, dans un secteur en bas au milieu de l'image, et dans une orientation angulaire particulière, par exemple à l'horizontale ou à la verticale par rapport au plan de l'image. Ces informations sont stockées en tant que données du code d'accès que constituent ces types d'objets et leur dispositions/orientations.

Sur la figure 2, si des types d'objets du code d'accès ne se retrouvent plus dans l'image acquise (par exemple ici le livre et le stylo) et/ou si les types d'objets du code d'accès et retrouvés par l'intelligence artificielle ne sont pas aux positions attendues, alors le code d'accès présenté au circuit de traitement n'est pas vérifié comme étant valide et il n'est pas donné accès au service requis par l'utilisateur.

Comme exposé ci-avant, l'usage de l'intelligence artificielle sert à reconnaitre des types d'objets et non pas ces objets en tant que tels. Néanmoins, le choix de l'utilisateur peut déjà être vaste parmi une pluralité de types distincts d'objets à reconnaitre. Ainsi, dans une réalisation particulière, la vérification de validité du code d'accès peut consister à reconnaitre simplement un seul type d'objet (choisi préalablement par l'utilisateur), dans une image, indépendamment par exemple de la disposition de cet objet dans l'image. Dans ce mode de réalisation, dans lequel un seul objet est utilisé, le circuit de traitement est configuré pour reconnaitre le type d'objet. Dans un autre mode de réalisation, le circuit peut être configuré pour reconnaitre le type d'objet et sa disposition dans une image (cette image pouvant être une image du bureau ou une image de toute autre partie d'une pièce).

En outre, il peut être prévu de présenter successivement plusieurs types d'objets à la caméra pour que le circuit de traitement enregistre ces différents types d'objets (dans l'ordre de leurs présentations successives à la caméra ou non). Ainsi, en référence aux figures 3 et 4, si, pendant la phase de vérification de validité du code d'accès, des objets de types différents sont présentés à la caméra, le code d'accès n'est pas validé.

En référence à la figure 5 illustrant une réalisation particulière, si en outre l'ordre dans lequel les types d'objets sont présentés ne correspond pas à celui enregistré préalablement, le code d'accès n'est pas validé. Ainsi, dans cette réalisation de la figure 5, il est présenté séquentiellement plusieurs types d'objets différents à la caméra et le dispositif doit reconnaitre ensuite, pour vérifier la validité du code, ces types d'objets (la banane d'abord, puis le smartphone, puis le livre, puis le stylo) dans une séquence particulière correspondant à celle préalablement enregistrée. Dans cette réalisation, les objets dont les types sont à reconnaitre ne sont donc pas nécessairement dans une même image simultanément comme illustré sur la figure 1.

Ainsi, l'utilisation d'objets du quotidien, éventuellement localisés correctement dans l'espace (figures 1 et 2), et à disposition habituellement d'un utilisateur (sur son bureau typiquement) permet de faciliter la saisie d'un code d'accès par cet utilisateur et en même temps d'améliorer la sécurité de l'accès (sans se baser sur une suite de caractères comme mot de passe habituel). Ce code d'accès peut en effet être qualifié de « fort » dès lors qu'il utilise plusieurs concepts différents (différents types d'objets) alors qu'un mode de passe classique ne se réfère en général qu'à un seul concept (un seul mot ou une seule suite logique de mots, agrémentés éventuellement de chiffres et/ou caractères spéciaux), ou alors la suite de caractères qui correspond au mode de passe est aléatoire et donc très difficile à retenir pour un utilisateur.

L'utilisateur n'a alors besoin que de positionner, dans le champ de la caméra, différents objets. L'intelligence artificielle permet de reconnaitre les objets et en particulier d'identifier les types d'objets et éventuellement leurs positions dans l'image.

Le dispositif peut être utilisé avec un serveur distant, les informations (type d'objet et positions) étant remontées du circuit de traitement au serveur distant pour comparaison (au code d'accès de référence préalablement enregistré auprès du serveur). Le code d'accès de référence qui est stocké auprès du serveur peut être généré de différentes façons.

Dans une première réalisation, il est saisi par la caméra et les données d'image ainsi acquises sont remontées au serveur qui met en oeuvre une intelligence artificielle pour reconnaitre les différents types d'objets et leurs positions respectives dans l'image acquise et/ou dans la séquence d'images acquises.

Dans une deuxième réalisation, le serveur peut proposer à un utilisateur un service de saisie de code d'accès via une page d'accueil d'un site web dans laquelle il est proposé à l'utilisateur de cocher différents types d'objet du quotidien (tasse, clavier et/ou souris d'ordinateur, stylo, smartphone, feuille de papier, etc.). L'utilisateur en fait une sélection dans un ordre ou une disposition qu'il choisit en ligne et ces informations sont enregistrées auprès du serveur. Ensuite, l'utilisateur présente des types d'objets correspondant à ceux préalablement sélectionnés en ligne (éventuellement dans un ordre et/ou une disposition qu'il a choisie préalablement) et l'intelligence artificielle du serveur reconnait ces types d'objets et détermine ainsi s'ils correspondent à ceux préalablement sélectionnés par l'utilisateur.

Si le dispositif est utilisé en local (sans impliquer un serveur), ces informations sont confrontées avec des informations préalablement enregistrées dans une mémoire du dispositif (cette mémoire stockant en local les données d'informations de types d'objets et éventuellement de dispositions et/ou d'ordre d'apparition dans une séquence, correspondant au code d'accès qui est à vérifier ultérieurement).

La réalisation présentée ci-avant peut être utilisée dans une application bureautique, par exemple pour ouvrir l'accès à un ordinateur de bureau.

Elle peut être utilisée aussi pour ouvrir en local, de façon fiable et discrète, une porte comme par exemple la porte d'un coffre. Par exemple, l'utilisateur peut placer devant la caméra des objets pour former une image correspondant à un code d'accès visuel. Dans le mode d'apprentissage, le dispositif peut être configuré pour confirmer le début d'enregistrement du code d'accès en émettant, par exemple via une interface homme machine, un signal sonore ou visuel. L'utilisateur dispose par exemple de quelques dizaines de secondes pour placer les objets de son choix dans le champ de la caméra. Ensuite, le dispositif peut être configuré pour confirmer l'enregistrement par un retour sonore ou visuel par animation de l'interface homme machine précitée. Après cette phase d'enregistrement du code d'accès, dans une phase ultérieure de vérification du code, l'utilisateur souhaitant accéder à une ressource (par exemple ouvrir un coffre-fort ou désactiver un système d'alarme), place devant la caméra des objets de son choix et entre une consigne d'ouverture ou de coupure d'alarme. Si le code visuel est correct, le dispositif peut être configuré pour donner un ordre à un actionneur par exemple pour ouvrir une porte et anime l'interface homme machine pour émettre un signal sonore ou visuel indiquant que le code d'accès est correct. Si le code est incorrect, aucun retour n'est effectué afin de ne pas donner d'indications sur le code d'accès.

En référence maintenant à la figure 6, un dispositif DIS pour la mise en oeuvre du procédé ci-avant peut comporter dans son circuit de traitement au moins une mémoire MEM et un processeur PROC. La mémoire MEM peut stocker notamment des codes d'instructions d'un programme d'ordinateur pour la mise en oeuvre du procédé, ainsi par exemple que des données d'informations de code d'accès préalablement enregistrée. Le processeur PROC peut accéder à la mémoire MEM notamment pour exécuter les instructions précitées. Le dispositif DIS peut comporter en outre la caméra précitée CAM, laquelle est reliée au processeur PROC via une interface vidéo INTC. Le dispositif DIS peut comporter en outre une interface de communication COM avec un serveur distant SER (via un réseau de communication RES), par exemple dans le cas présenté ci-avant où l'enregistrement et la vérification du code d'accès sont réalisées auprès du serveur SER. Le processeur PROC peut piloter en outre une interface homme machine INTS pour diffuser par exemple différents signaux sonores par un haut-parleur HP afin d'informer l'utilisateur des différents succès dans la saisie et/ou la validation du code d'accès. Le processeur PROC peut piloter en outre une interface INTA de commande de l'ouverture d'une porte dans cet exemple de réalisation.

On a illustré sur la figure 7 différentes étapes d'un procédé du type décrit ci-avant selon un exemple de réalisation. Une première étape S0 peut consister en un apprentissage par l'intelligence artificielle afin de reconnaître différents types d'objets. Par exemple ici, des images de différents stylos sont présentées à l'intelligence artificielle pour lui apprendre à reconnaître un type d'objet tel qu'un stylo en général. Ensuite à l'étape S1, pour un enregistrement d'un code d'accès visuel, une image (ou plusieurs images séquentielles) de différents objets est présentée à l'intelligence artificielle pour lui faire reconnaître les types d'objets figurant dans chaque image. L'information de ces types d'objets (et éventuellement leur disposition) est enregistrée en mémoire et constitue le code d'accès visuel. À une étape suivante S2, au moins une image (ou une séquence) est présentée avec différents types d'objets disposés par l'utilisateur et le dispositif reconnait ou non ces différents types d'objets pour valider ou non le code d'accès. Si ce test de l'étape S2 est positif, l'accès au service requis peut être fourni (étape S3).

Ci-dessus, l'étape S0 notamment est optionnelle, bien entendu. Typiquement, il existe déjà sur le marché des modules préprogrammés mettant en oeuvre une intelligence artificielle capable de reconnaitre différents types d'objets. Un tel module peut être implémenté auprès du dispositif DIS ou encore auprès d'un serveur tel que le serveur SER précité, ou encore auprès d'une autre entité capable de communiquer avec le dispositif DIS.

Plus généralement, la présente invention ne se limite pas aux formes de réalisation présentées ci-avant à titre d'exemple ; elle s'étend à d'autres variantes.

Par exemple, le code visuel peut correspondre à un type d'objet particulier à reconnaitre parmi d'autres objets dans une image, ce type particulier d'objet devant par exemple être disposé dans une zone prédéfinie de l'image. Dans cette réalisation, tous les types d'objets apparaissant dans l'image ne sont pas nécessairement à reconnaitre, mais l'un au moins d'eux doit être reconnu et l'accès est donné uniquement si ce type d'objet reconnu est présent avec d'autres objets.

## Revendications

1. Procédé mis en oeuvre par un dispositif informatique, de vérification d'un code d'accès à un service, dans lequel le code d'accès est au moins un type d'objet à reconnaitre par le dispositif, le procédé comprenant :
- obtenir des données d'au moins une image comportant au moins un objet,
- rechercher, par reconnaissance informatique, au moins un type d'objet dans lesdites données d'image, et
- en cas de détection du type d'objet dans lesdites données d'image, donner accès au service.

2. Procédé selon la revendication 1, dans lequel la recherche du type d'objet par reconnaissance informatique comporte :
- mettre en oeuvre une intelligence artificielle afin de reconnaitre un type d'objet dans lesdites données d'image.

3. Procédé selon l'une des revendications précédentes, dans lequel les données d'image comportent une pluralité d'objets, et le procédé comprend en outre :
- en cas de détection de chaque type d'objet correspondant chacun à un objet dans les données d'image, donner accès au service.

4. Procédé selon la revendication 3, dans lequel les données d'image comportent ladite pluralité d'objets dans un même plan d'image, et dans lequel le code d'accès comprend, outre les types d'objets à détecter dans un même plan d'image, une disposition à détecter de chaque type d'objet dans le plan d'image.

5. Procédé selon la revendication 4, dans lequel le code d'accès comprend, outre les dispositions à détecter pour chaque type d'objet dans le plan d'image, une orientation angulaire dans la disposition d'au moins un desdits objets, à détecter dans le plan d'image.

6. Procédé selon l'une des revendications 4 et 5, dans lequel les données d'image comportent un plan d'image d'un bureau comprenant au moins un élément parmi un clavier, une souris, une tasse, un stylo, une feuille de papier, un smartphone.

7. Procédé selon l'une des revendications 3 à 6, dans lequel les données d'image comportent une succession d'images comportant chacune au moins un objet distinct d'une image à une image suivante dans ladite succession, et dans lequel le code d'accès comprend les types d'objets à détecter dans les images successives.

8. Procédé selon la revendication 7, dans lequel le code d'accès comprend les types d'objets à détecter dans un ordre correspondant aux images successives.

9. Programme informatique comportant des instructions pour la mise en oeuvre du procédé selon l'une des revendications précédentes, lorsqu'elles sont exécutées par un processeur.

10. Dispositif informatique comportant un circuit de traitement configuré pour mettre en oeuvre une reconnaissance informatique d'au moins un type d'objet dans des données d'image, pour la réalisation du procédé selon l'une des revendications 1 à 8.

11. Dispositif informatique selon la revendication 10, comportant une interface de communication pour obtenir lesdites données d'image et émettre une donnée de validation du code d'accès.

12. Dispositif informatique selon la revendication 10, comportant une caméra reliée au circuit de traitement pour obtenir lesdites données d'image.

13. Dispositif informatique selon la revendication 12, dans lequel la caméra est montée dans le dispositif pour être orientée vers le bas, en vue de la mise en oeuvre du procédé selon la revendication 6.
